# EUROPÄISCHE PATENTSCHRIFT

(11) **EP 1 426 557 B1**
(45) Veröffentlichungstag und Bekanntmachung des Hinweises auf die Patenterteilung: **17.07.2013**
(21) Anmeldenummer: 02026895.9
(22) Anmeldetag: 03.12.2002
(51) Int. Cl.: F02B 67/10, F02B 39/00, F01N 13/10, F04D 29/42, F04D 29/60, F01D 9/02, F01D 25/26, F01D 25/24, F02C 6/12

(54) **Gehäuse für Turbolader**
Casing for turbo charger
Boîtier pour turbocompresseur

(43) Veröffentlichungstag der Anmeldung: 09.06.2004
(73) Patentinhaber: BorgWarner, Inc., Auburn Hills, MI 48326-2872 (US)
(72) Erfinder: Körner, Thomas, 45661 Rechlinghausen (DE)
(74) Vertreter: Balsters, Robert

(56) Entgegenhaltungen:
- EP-A- 0 671 551
- DE-A- 10 022 052

## Beschreibung

### Gebiet der Erfindung

Die Erfindung bezieht sich auf ein Gehäuse für Turbolader mit einem Rotorraum zur Aufnahme eines Turbinenrotors, welcher Rotorraum von einem Gehäusemantel umgeben ist, der mindestens zum Teil aus Blech besteht. Ferner ist eine Anschlußrohrleitung für den Anschluß an mindestens eine Abgassammelleitung eines Verbrennungsmotors vorgesehen.

### Hintergrund der Erfindung

Turbinengehäuse aus Blech sind schon verschiedentlich vorgeschlagen worden. Ein Beispiel dafür ist etwa der US-A-2,801,043, der DE-A-100 22 052 oder der WO 01/94754 zu entnehmen. Der Vorteil einer solchen Lösung liegt in der einfacheren Herstellbarkeit und im geringeren Gewicht gegenüber gegossenen Turbinengehäusen. Zu erwähnen ist auch die sogenannte LSI-Technik, d.s. Gehäuse mit isoliertem Luftspalt.

Ein - abgesehen von den Herstellungsproblemen - ganz anderes Problem bei Turboladern, von dem auch die vorliegende Erfindung ausgeht, ist die Tatsache, daß nach dem Start eines Verbrennungsmotors der Katalysator eine gewisse Zeit benötigt, um auf Betriebstemperatur zu kommen, bei der er seine volle Leistung entfaltet. Ist während dieser Zeit der Turbolader in Betrieb, so nimmt dieser einen Teil der Abgaswärme auf, so daß das zum Katalysator gelangende Gas bereits etwas abgekühlt ist und somit der Katalysator längere Zeit benötigt, um auf Betriebstemperatur zu gelangen. Diese Zeit verlängert sich bei Gußgehäusen noch, weil hier ja eine viel größere Wärmeaufnahmefähigkeit besteht.

### Kurzfassung der Erfindung

Der Erfindung liegt - in einem ersten Schritt - die Erkenntnis zugrunde, daß für das zuletzt angesprochene Problem die Verwendung eines Turbinengehäuses aus Blech zwar eine Verbesserung darstellt, daß aber damit noch immer kein Optimum in wärmetechnischer Hinsicht erzielt wird. Insofern ist es Aufgabe der Erfindung, ein Gehäuse so auszugestalten, daß die Wärmeverluste über den Weg bis zum Katalysator möglichst gering sind.

Diese Aufgabe wird erfindungsgemäß durch die kennzeichnenden Merkmale des Anspruchs 1 gelöst.

Es ist aber nicht nur die Lösung dieser Aufgabe, welche durch die Erfindung gelingt, sondern es ergeben sich in überraschender Weise auch noch weitere Vorteile:
- während beim oben zitierten Stand der Technik der Anschluß des Gehäuses an den Abgassammler über eine Flanschverbindung erfolgte, fällt dies nun weg, was seinerseits eine gewisse Gewichtsersparnis mit sich bringt;
- damit aber wird auch die Montage erleichtert, da der bisher benötigte Platzbedarf für die Befestigung der Flanschschrauben entfällt, d.h. aber auch, daß die Anordnung kompakter sein kann, wenn dies gewünscht wird;
- ebenso entfällt die Flanschdichtung;
- während beim Stand der Technik neben der Flanschverbindung noch eine große Anzahl von Schweißnähten erforderlich war, entfällt dies weitgehend bei der erfindungsgemäßen Ausbildung.

Eine weitere Vereinfachung ergibt sich, wenn die wärmeleitende Verbindung mindestens zum Teil als Schiebeverbindung ausgeführt ist, und vorzugsweise eine trichterförmige Aufweitung des einen rohrförmigen Teiles, insbesondere der Gehäusewand, aufweist, in die das rohrförmige Ende des jeweiligen anderen Teiles, insbesondere der Anschlußrohrleitung, steckbar ist. Damit entfallen aufwendige Montagevorgänge. Unter "Schiebeverbindung" ist dabei eine Verbindung zu verstehen, bei der die Teile ineinandergesteckt sind, aber noch immer die Möglichkeit einer schiebenden Relativbewegung auf Grund von Wärmedehnungen, Vibrationen etc. haben.

Wenn der Gehäusemantel aus mindestens zwei übereinander angeordneten Blechlagen besteht, so ist es vorteilhaft, die äußere dicker auszuführen ist als die innere, denn einerseits wird durch die mindestens doppelte Blechlage eine höhere Festigkeit und eine noch bessere Isolation (weniger Wärmeverlust) erreicht, anderseits bietet eine dickere Blechlage, und die ist vorteilhaft die äußere, einen besseren Berstschutz. Dazu kommt, daß die innere, dünnere Blechlage so relativ rasch ihre maximale Wärmespeicherkapazität erreichen, d.h. je dünner die Innenwand ist, desto rascher ist dieser Zeitpunkt erreicht. Da diejenige Wärmemenge, welche dann an die Umgebung durch Strahlung bzw. Konvektion abgegeben wird, im wesentlichen konstant ist, kann dem Abgas keine weitere Wärme entzogen werden.

Diese letzteren Merkmale können nun so kombiniert werden, daß von den übereinander angeordneten Blechlagen die bzw. eine der inneren Lagen die Steck- oder Schiebeverbindung bildet, wogegen die jeweils äußerste Lage der Teile miteinander verschweißt sind. Denn damit wird eine nach außen hin dichte Verbindung geschaffen, ohne daß die inneren Schichten miteinander verschweißt werden müssen, wobei das Gas allenfalls dazwischen gelangen kann und zur Isolation beiträgt.

Zusätzlich oder alternativ kann über der innen liegenden Blechlage des Gehäusemantels mindestens eine äußere Lage in Form einer Isolationsschicht vorgesehen sein. Eine solche Isolationsschicht kann beispielsweise aus einem Keramikvlies oder aus Silikatfasern bestehen. Wie Versuche gezeigt haben, erfüllt eine solche Schicht nicht nur ihre Aufgabe der Isolation, sondern verbessert auch den Berstschutz.

Es hat sich allerdings gezeigt, daß derlei Isolationsschichten, wenn sie aus ungesponnenen Fasern bestehen, leicht dazu neigen, durch die Vibrationen des Verbrennungsmotors aus ihrer vorbestimmten Lage zu geraten und an einer Stelle ansammeln, wodurch natürlich die erwünschte Isolationswirkung nicht mehr voll gegeben ist. Deshalb ist es bevorzugt, wenn die Isolationsschicht aus einem Textilstoff (z.B. einem Glasfasergewebe, - gestricke oder -gewirke) gebildet ist. Beispiele solcher Isolierungen lassen sich beispielsweise der WO 97/48943 oder der WO 00/05532 entnehmen, deren Inhalt hier durch Bezugnahme als geoffenbart gelten soll. In jedem Falle bringt die Isolationsschicht nicht nur eine bessere Wärmedämmung, sondern erhöht auch die Berstsicherheit.

Die Herstellung eines erfindungsgemäßen Gehäuses erfolgt zweckmäßig so, daß der Gehäusemantel aus mindestens zwei, einander ergänzenden Spiralteilen zusammengesetzt ist, welche durch Schweißen miteinander verbunden sind, wobei vorzugsweise auch ein Zufuhrgaskanal des Gehäusemantels mit der Anschlußrohrleitung über die Länge zweiteilig und jeweils in einem Stück mit dem zugehörigen Spiralteil ausgeführt ist. Damit erhält man eine dichte und zuverlässige Verbindung, die auch weniger als platzaufwendig ist als mit den bisher benützten Flanschen. Damit kann mit einer einzigen Schweißnaht die Verbindung über die ganze Länge (gesehen quer zur Drehachse der Turbine) durchgeführt werden.

### Kurzbeschreibung der Zeichnungen

Weitere Einzelheiten der Erfindung ergeben sich an Hand der nachfolgenden Beschreibung von in der Zeichnung schematisch dargestellten Ausführungsbeispielen. Es zeigen:
- Fig. 1: eine Perspektivansicht einer erfindungsgemäß ausgeführten Einheit aus Abgassammler eines Verbrennungsmotors und einem Turbinengehäuse eines Turboladers;
- Fig. 2: die einzelnen Teile dieser Einheit in explodierter Darstellung;
- Fig. 3: ein erstes Ausführungsbeispiel der Verbindung von Turbinengehäuse und Anschlußrohr aus dem Abgassammler in einem Schnitt quer zur Achse der Turbine, wozu
- Fig. 4: eine bevorzugte Alternative veranschaulicht.

### Detaillierte Beschreibung der Zeichnung

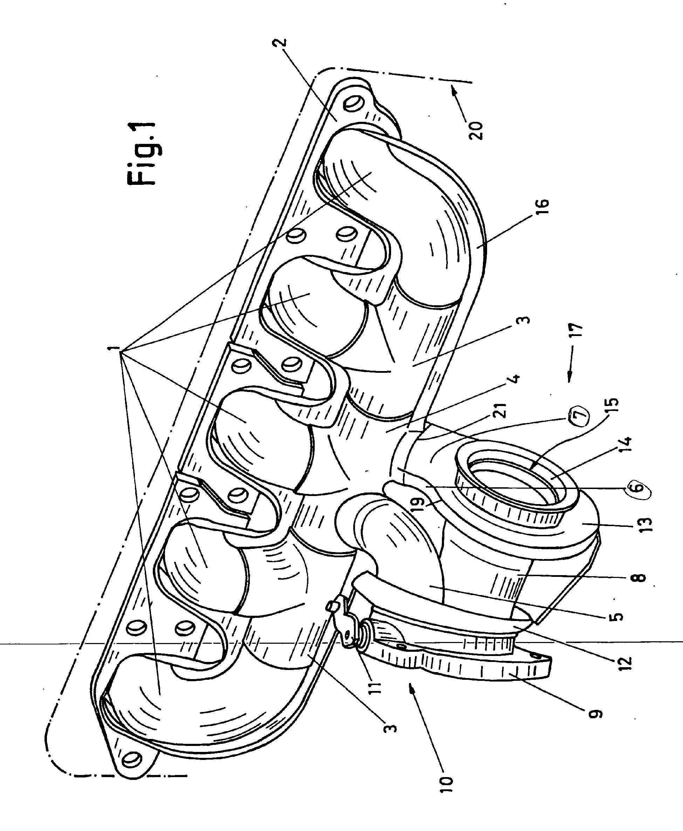

Aus einem in Fig. 1 lediglich strich-punktiert angedeuteten Verbrennungsmotor 20 führen fünf Abgaskrümmer 1 jeweils zu einzelnen T-Abgasrohren 3, die insgesamt einen Abgassammler bilden und letztlich in ein Sammelrohrstück 4 münden. Es ist klar, daß dies nur ein Beispiel darstellt und die Erfindung nicht auf eine bestimmte Anzahl von Abgaskrümmern 1 beschränkt ist. Die T-Abgasrohre 3 sind mit einem Eingangsflansch 2 verschweißt, der am Verbrennungsmotor 20 befestigt ist. Die Erfindung ist jedoch auf diese Ausführung nicht beschränkt, vielmehr kann auch ein Abgassammler an sich bekannter Art verwendet werden, in den das Sammelrohrstück 4 eingesetzt ist. Im vorliegenden Falle ist es vorteilhaft, die einzelnen Teile 3, 4 noch von unten durch einen unteren Deckel 16 abzudecken, dem ein hier nicht gezeigter oberer Deckel gegenüberliegen kann. Zwischen den einzelnen Sammlerabschnitten 3, 4 und den Deckeln kann eine Isolierschicht, z.B. aus einem Vlies, angeordnet sein.

Das Sammelrohrstück 4 stellt die Verbindung zwischen den aus den Teilen 3 gebildeten Abgassammler und einem Turbinengehäuse 17 her. Im Sammelrohrstück 4 endet auch der mittlere Abgaskrümmer 1 (es könnte aber auch jeder andere Abgaskrümmer, wie etwa einer am Ende des Abgassammlers sein), während er, wie ersichtlich, in Axialrichtung an je ein T-Abgasrohr 3 angeschlossen ist. Vorteilhaft ist wenigstens ein Teil dieser Bestandteile des Abgassammlers, bevorzugt wenigstens das Sammlerohrstück 4, allenfalls auch mindestens ein Teil der T-Abgasrohre, aus verformten Blech hergestellt, wobei als Verformungsvorgang eine Explosionsverformung denkbar ist, bevorzugt jedoch isostatisches Pressen bzw. hydraulisches Pressen (z.B. unter Anwendung von hydraulischem Druck von innen auf ein in einer entsprechenden Form gelegenes Blech). Eine Alternative könnte allerdings darin bestehen, das Sammelrohrstück 4 selbst aus einem Feingußteil herzustellen.

Eine weitere Verbindung aus dem Sammelrohrstück 4 kann zu einem Bypasskanal 5 gehen, über den wenigstens ein Teil des Abgases des Verbrennungsmotors 20 über eine mittels eines Hebels 11 betätigbaren Klappe 10 (der Pfeil zeigt nur den Ort dieser Klappe an) einem weiteren Verwender, wie etwa dem Katalysator, zuführbar ist. Dabei ist ersichtlich, daß der Hebel 11 an einer in einem Flansch 9 gelagerten Welle befestigt ist, an welchen Flansch ein Auslaßkanal 8 anschließt bzw. mit ihm verschweißt sein kann. Eine spezielle Buchse wie beim Stand der Technik für die Unterbringung der Klappe bei 10 sowie ihre Betätigungswelle mit dem Hebel 11 kann entfallen.

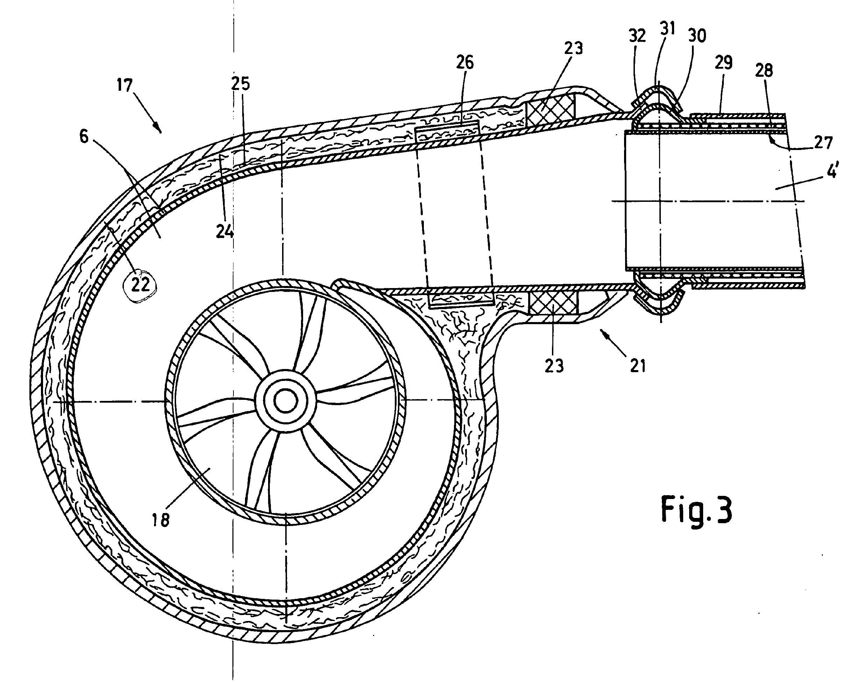

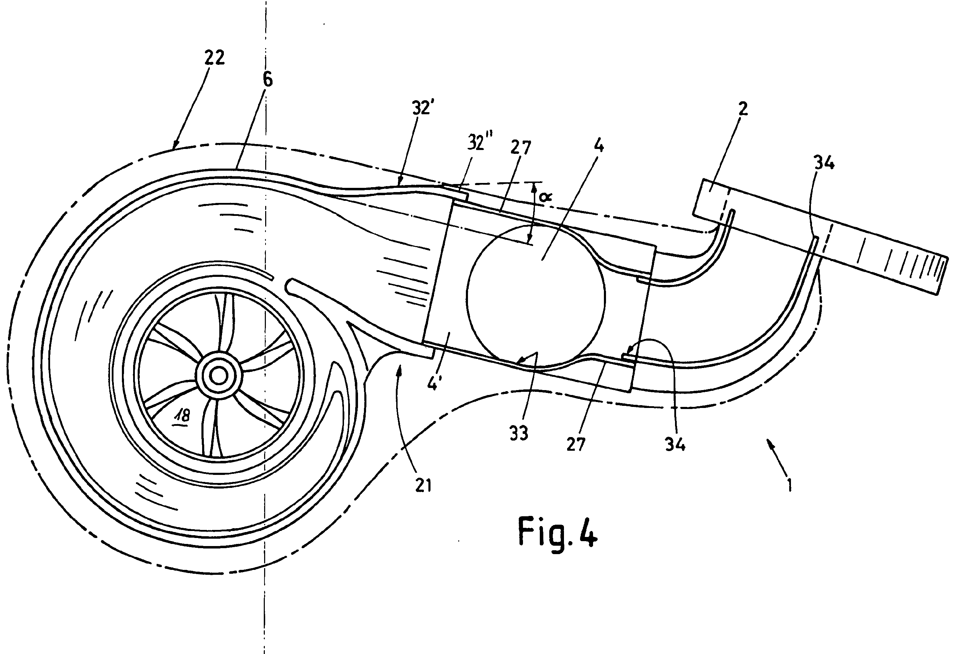

Das Turbinengehäuse 17 ist, wie üblich, etwa spiralförmig ausgebildet, um so das Abgas einer in der Mitte der Spirale gelegenen Turbine (vgl. 18 in den Fig. 3, 4) zuzuführen. Es umgibt in üblicher Weise einen Rotorraum 15, in welchem sich der Turbinenrotor 18 dreht (vgl. Fig. 3, 4). Wie besonders aus Fig. 1 ersichtlich ist, setzt sich das Turbinengehäuse 17 aus einer linken Spiralhälfte 6 und einer rechten Spiralhälfte 7 zusammen, welche Hälften miteinander entlang der in Fig. 1 sichtbaren Naht 19 verschweißt sind. Dadurch wird eine dichte und weniger platzaufwendige Einheit geschaffen, als dies mit einer (auch gewichtsmäßig schwereren) Flanschverbindung entlang der Linie 19 erreicht werden könnte. An die rechte Gehäusehälfte 7 kann dann das Lagergehäuse bzw. das Kompressorgehäuse eines Turboladers angeschlossen werden, der von der Turbine 18 angetrieben wird. Zum Anschluß dieser Teile eines Turboladers ist ein Lagergehäuseflansch 14 vorgesehen, der mit der rechten Spiralhälfte 7 verschweißt ist oder auf andere Art dicht verbunden sein kann. Die linke Gehäusehälfte 6 dagegen bildet nicht nur die halbe Spirale, sondern auch die an sich bekannte Radkontur der Turbine 18 (Fig. 3, 4) bzw. den Anschluß zu einem Auslaßkanal 8, wie er herkömmlich vorgesehen ist. Dieser Auslaßkanal 8 kann vorzugsweise ebenfalls aus Blech bestehen und auf ähnliche Weise mit dem Turbinengehäuse 17 verbunden sein, wie dies später noch an Hand der Verbindung zwischen Zufuhrgaskanal 21 und Turbinengehäuse 17 im Zusammenhang mit den Fig. 3 oder 4 beschrieben wird.

Denn, wie ersichtlich, erstreckt sich die Schweißnaht 19 nicht nur über den spiraligen Gehäuseteil des Turbinengehäuses 17, sondern ist so verlängert, daß sie in einem Stück auch den mit dem Sammelrohrstück 4 unmittelbar verbundenen Zufuhrgaskanal 21 bildet, wodurch die Wärmeverluste verringert und die Herstellung erleichtert wird. Über dem so hergestellten Turbinengehäuse kann noch eine weitere Blechlage vorgesehen werden, wie ein Abschlußblech bei 13 bzw. allenfalls noch ein Berstmantel. Es ist im Rahmen der Erfindung durchaus möglich, beispielsweise vier Blechlagen übereinander anzuordnen. Allerdings sind Mischformen durchaus möglich, bei denen Einzelteile, wie der Abschlußteil 13 oder der oben besprochene Lagergehäuseflansch 14 aus Feinguß ausgeführt sind.

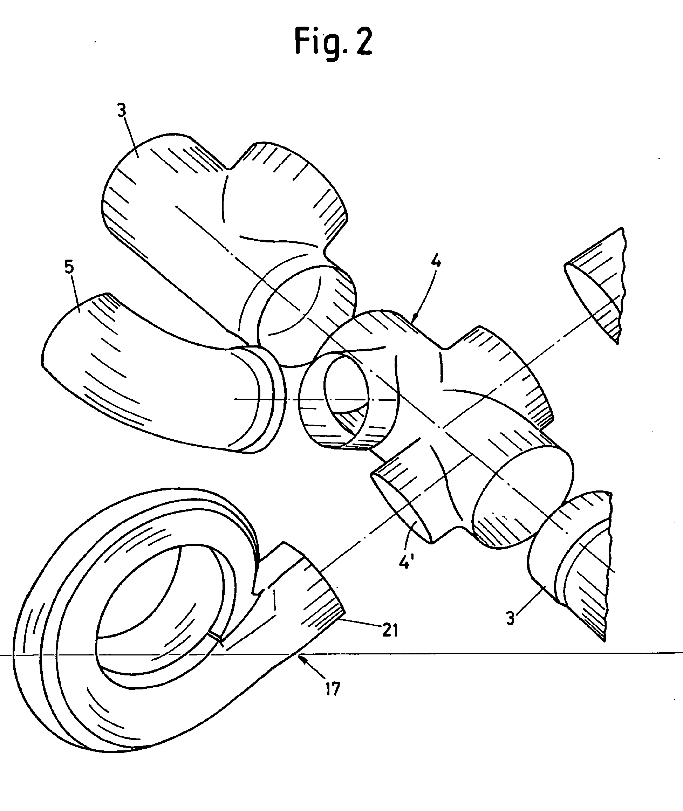

Fig. 2 verdeutlicht den oben beschriebenen Aufbau bzw. die dazu gehörigen Teile in einer explodierten Darstellung. An Hand der Fig. 3 und insbesondere 4 soll nun an Hand von aus zwei Blechlagen und mindestens einer Isolierschicht bestehenden Ausführungsbeispielen gezeigt werden, wie diese Teile zusammengefügt sind.

Gemäß Fig. 3 ist die Außenseite des Turbinengehäuses 17 aus dem inneren Spiralteil 6 aus Blech, beispielsweise von 0,5 bis 1,5 mm, aufgebaut, der an der Außenseite von einem stärkeren Blechmantel 22 umgeben ist. Der Blechmantel 22 besitzt beispielsweise eine Stärke im Bereiche von 1,5 bis 5 mm. Annähernd kann der äußere Blechmantel 22 gegebenenfalls 1,5 bis 3 mal so dick wie der innere Mantel 6 sein. Zwischen diesen Blechlagen liegt vorzugsweise ein Abstand von mindestens 1 mm und vorzugsweise maximal 8mm. Beispielsweise liegt der Abstand im Bereiche von 2 bis 5mm. Wie die Spiralteile 6, 7 kann auch der äußere Blechmantel aus zwei (Spiral-)Hälften zusammengesetzt sein, wobei natürlich in jedem Falle auch die Fertigung aus mehr als zwei Teilen möglich ist.

Beide Lagen können durch, zweckmäßig isolierende, Abstandhalter 23 in einem Abstand voneinander gehalten werden, wobei der in Fig. 3 gezeigte Abstandhalter 23 den Auslaßkanal 21 des Turbinengehäuses 17 ringförmig umgeben kann. in dem in Fig. 3 rechts gezeigten Endbereich des Blechmantels 22 ist derselbe gegen das Innenblech (Teil 6) gedrückt und an dieses beispielsweise angeschweißt.

Zwischen den beiden Blechlagen 6, 22 kann mindestens eine Isolierschicht vorgesehen werden. Im gezeigten Ausführungsbeispiel sind es zwei Textilstoffschichten 24 bzw. 25, zwischen denen gegebenenfalls auch noch eine dünne Metall- oder Blechschicht 26 angeordnet sein kann, die beispielsweise gegen das radiale Innere hin reflektierend ausgebildet ist. Die in Fig. 3 gezeigte Blechschicht 26 ist nur im Bereiche des Zufuhrkanales 21 vorgesehen, kann aber im gesamten Zwischenraum zwischen der inneren Blechlage 6 und dem Blechmantel 22 vorgesehen werden. Dies hat insbesondere einen Vorteil, wenn eine solche innere Blechlage 26 im Bereiche des Spiralgehäuses rund um den Turbinenraum angeordnet wird, weil dadurch ein noch besserer Berstschutz gewährleistet ist.

An den zusammen mit dem Gehäuse 17 aus einem Stück hergestellten Zufuhrkanal 21 ist ein Ast 4' des Sammelrohrstückes 4 (vgl. Fig. 2) ohne Schweißung mit bloßer Steckverbindung angeschlossen, der eine Anschlußrohrleitung bildet. Es ist ersichtlich, daß auch mindestens diese Anschlußrohrleitung 4', gegebenenfalls aber auch das gesamte Sammelrohrstück 4, aus einem inneren Rohr 27, einer Isolierlage 28 und einem Blechmantel 29 aufgebaut ist. Wie ersichtlich, kann auch dieser Blechmantel 29 aus etwas dickerem Blech bestehen, obwohl ja in diesem Bereich kein Berstschutz erforderlich ist. Hier sei aber angemerkt, daß die einteilige Ausführung der Anschlußrohrleitung 4' mit dem Sammelrohrstück 4 zwar bevorzugt, aber im Rahmen der vorliegenden Erfindung nicht unbedingt erforderlich ist.

Zwischen dem Innenblech 27 und dem Blechmantel 29 ist ein ringförmiges Nasenstück 30 eingeklemmt bzw. am Blechmantel 29 angeschweißt. Das linke Ende (bezogen auf Fig. 3) dieses Nasenstückes 30 kann am Innenblech 27 angeschweißt sein. Es ist aber ebenso möglich, nur eine Schweißstelle vorzusehen, da diese genügen wird, um eine gegenseitige Verschiebung der Teile zu vermeiden. Dieses Nasenstück wirkt mit einer konischen Aufweitung 32 am Ende des Zufuhrgaskanales 21 zusammen, indem es zusammen mit der Aufweitung zur Abstützung eines aufgeschnappten oder mittels einer (nicht dargestellten) Schraube zusammengezogenen offenen Klemmringes 31 dient, der den Sitz der Anschlußrohrleitung 4' am Zufuhrgaskanal 21 sichert. Der Wärmeübergang von der Anschlußrohrleitung 4' des Sammelrohrstückes auf das Turbinengehäuse 17 erfolgt so über die Bleche 27, 29, das Nasenstück 30 und das Konusstück 32.

Einen noch besseren Wärmeübergang erhält man bei einer Ausführung nach Fig. 4. Dieses Ausführungsbeispiel unterscheidet sich von dem nach Fig. 3 dadurch, daß das Konusstück 32' einen flacheren Winkel α hat als bei der vorherigen Ausführungsform. Dieser Winkel α sollte maximal 30°, vorzugsweise maximal 20° betragen, so daß das innere Blech 27 reibungsschlüssig daran zu liegen kommt und ein Wärmeübergang über eine relativ große Fläche erfolgt. Zu klein sollte dieser Winkel α aber auch nicht sein, um das Einführen des inneren Rohrbleches 27 nicht zu erschweren, und sollte wenigstens 7° betragen. Die günstigste Ausführung erfolgt vorteilhaft so, daß das Konusstück 32' als Einlaßtrichter für das Spiralgehäuse 17 dient und gerade so sehr aufgeweitet ist, daß in einem daran anschließenden Zylinderabschnitt 32" die Anschlußrohrleitung 4' unter Anlage an die Innenfläche des Zylinderabschnittes 32" einschiebbar ist. Dabei wird eine weitgehende Dichtheit erreicht, und die Länge des Zylinderabschnittes 32" wird zweckmäßig so gewählt, daß sich die Anschlußrohrleitung 4' darin bei Wärmedehnungen und infolge von Vibrationen des Verbrennungsmotors darin verschieben kann. Es versteht sich, daß es theoretisch möglich wäre, die Einmündung des Zufuhrgaskanales 21 ohne Konusübergang so zu gestalten, daß der erwähnte Zylinderabschnitt 32" an der Anschlußrohrleitung 4' zu liegen kommt.

In Fig. 4 ist nicht nur die Anschlußrohrleitung 4' des Sammelrohrstückes 4 gezeigt, sondern das ganze Sammelrohrstück 4 im Schnitt. Dieses weist eine mittlere Öffnung 33 für den Anschluß der Nachbarteile 3 (vgl. Fig. 1) auf. Hinter dieser Öffnung 33 (in Fig. 4 rechts) verengt sich das Innenrohr 27, um ein in es hineingestecktes inneres Krümmerrohr 34 aufzunehmen, das in einem Außenrohr 35 untergebracht ist und am Flansch 2 (vgl. Fig. 1) angeschweißt ist.

Wie strich-punktiert in einer Außenkontur gezeigt ist, kann auch hier wiederum ein äußerer Blechmantel 22 ähnlich der Fig. 3 vorgesehen werden. Während aber im Falle der Fig. 3 dieser äußere Blechmantel 22 unterbrochen ist, wird hier vorzugsweise mit den jeweiligen inneren Blechteilen 6, 27, 34 eine bloße Steck- bzw. Schiebeverbindung durchgeführt, wie oben erläutert wurde, was herstellungsmäßig leicht durchzuführen ist, wogegen der Blechmantel 22 über die gesamte in Fig. 4 gezeigte Länge verschweißt ist, was ja von der Außenseite keine Schwierigkeiten bereitet. Dadurch ist zwar der Innenteil 6, 27, 34 nicht gasdicht, und es kann Gas in den Zwischenraum zwischen innerem und äußerem Blech 22 gelangen, wo es zur Isolierung eher beiträgt. Es versteht sich aber, daß auch alle weiteren Lagen 24-26, welche an Hand der Fig. 3 beschrieben wurden, auch hier zur Anwendung gelangen können. Ferner kann es vorteilhaft sein, auch den äußeren Blechmantel 22 noch mit einer Isolationsschicht zu umgeben. Es sei hier aber vermerkt, daß die Konstruktion mit der oben definierten Schiebeverbindung, also der Verschiebungen zulassenden Steckverbindung, auch dann von besonderem Vorteil ist, wenn der Teil 4 bzw. 4' nicht aus Blech gefertigten werden, so daß diese Verbindungsart eine selbständige Erfindung darstellt.

Wie ersichtlich, hat der Blechmantel 22 über den größten Teil des erfindungsgemäß mit der Anschlußrohrleitung 4' vereinigten Gehäuses 17 einen etwa gleichmäßigen Abstand von der inneren Blechlage 6 bzw. 33. Dieser Abstand wird etwa 1 mm und vorzugsweise maximal 8mm betragen, wird sich aber zweckmäßig etwa im Bereich von 2 bis 5mm halten. Aus formungstechnischen Gründen kann aber ein kleinerer (vgl. bei 32") oder ein größerer Abstand (vgl. bei 21) vorteilhaft sein.

Ist die zweischalige, oben an Hand der Fig. 4 besprochene, Ausführung in der erwähnten Weise durchgehend, so ergeben sich die geringsten Wärmeverluste im Vergleiche zum Stande der Technik, bei dem eine Flanschverbindung vorgesehen war. Denn gerade der Verbindungsbereich zwischen dem Spiralgehäuse 17 und dem Sammelrohr 4 bzw. der Anschlußrohrleitung 4' stellt in der Praxis den heißesten Bereich dar. Ist dort ein Flansch vorgesehen, so weist dieser (abgesehen von seinem Gewicht) eine relativ große Fläche auf, über die relativ viel Wärme abgegeben wird (Wärmebrücke zur Umgebung). Bei der erfindungsgemäßen Lösung entfällt im bevorzugten Falle ein solcher Flansch und es entfallen daher überflüssige Wärmeverluste.

Im Rahmen der Erfindung sind verschiedene Varianten denkbar, etwa, daß nicht der größer bemessene Zufuhrgaskanal 21 das kleinere Anschlußrohrstück 4' umfaßt, sondern umgekehrt. Eine solche Ausführung ist aber weniger bevorzugt, weil sie strömungstechnisch nicht so günstig, wie die dargestellte Lösung ist. Ferner ist es selbstverständlich möglich, nur eine Blechlage zu verwenden, die dann vorzugsweise entweder mit Steckverbindung oder mit Schweißverbindung ausgeführt sein kann. Auch können die in Fig. 3 gezeigten Abstandhalter 23 in der verschiedensten Weise und an den verschiedensten Orten zwischen den Blechen ausgeführt werden, sofern nur ihre Funktion gesichert ist.

### Bezugszeichenliste

- 1: Abgasrohrbögen
- 2: Eingangsflansch
- 3: T-Abgasrohr
- 4: Sammelrohrstück
- 5: Bypasskanal
- 6: linke Spiralhälfte
- 7: rechte Spiralhälfte
- 8: Auslaßkanal
- 9: Auslaßflansch
- 10: Klappenteller
- 11: Klappenhebel
- 12: Auslaßblech
- 13: Abschlußblech
- 14: Lagergehäuseflansch
- 15: Rotorraum
- 16: unterer Deckel
- 17: Turbinengehäuse
- 18: Turbinenrotor
- 19: Schweißnaht zw. 6 + 7
- 20: Verbrennungsmotor
- 21: Zufuhrgaskanal
- 22: äußerer Blechmantel
- 23: Abstandhalter
- 24: Isolierschicht
- 25: Isolierschicht
- 26: Blechschicht
- 27: inneres Rohr v. 4
- 28: Isolierlage v. 4
- 29: Blechmantel v. 4
- 30: Nasenstück
- 31: Klemmring
- 32: Konusstück 32
- 33: Öffnung v. 4
- 34: inneres Krümmerrohr
- 35: Außenrohr

## Patentansprüche

1. Gehäuse für Turbolader mit einem
Rotorraum (15) zur Aufnahme eines Turbinenrotors (18) welcher Rotorraum (15) von einem, einen Gehäusemantel (6, 7, 21, 22) aufweisendem Turbinengehäuse (17) umgeben ist, welcher Gehäusemantel einen mit einem spiralförmigen Teil des Gehäusemantels des Turbinengehäuses (17) verbundenen Zufuhrkanal (21) aufweist, und der mindestens zum Teil aus Blech besteht,; einer Anschlussrohrleitung (4') für den Anschluss an mindestens eine Abgassammelleitung (3, 4) eines Verbrennungsmotors (20); wobei der Gehäusemantel (6, 7, 21, 22) des Rotorraums (15) aus Blech besteht;
**dadurch gekennzeichnet, dass**
mindestens auch die Anschlussrohrleitung (4') zur Verbindung mit der Abgassammelleitung (3, 4) aus Blech geformt
ist und mit dem aus Blech bestehenden Gehäusemantel (6, 7, 21, 22) in wärmeleitender Verbindung steht,
und dass die wärmeleitende Verbindung zwischen Zufuhrkanal (21) und Anschlussrohrleitung (4') als Schiebeverbindung ausgeführt wird, bzw. bei übereinander angeordneten Blechlagen (6, 22) die, bzw eine der inneren Lagen (6) die Schiebeverbindung bildet, wogegen in der äussersten Lage (22) die Teile miteinander verschweisst sind.

## Claims

1. Casing for a turbocharger having a rotor space (15) for accommodating a turbine rotor (18), which rotor space (15) is surrounded by a turbine casing (17) which has a casing shell (6, 7, 21, 22), which casing shell has a feed channel (21) which is connected to a helical part of the casing shell of the turbine casing (17), and which comprises at least partially sheet metal; having a connector pipeline (4') for connecting to at least one exhaust-gas collection line (3, 4) of an internal combustion engine (20); the casing shell (6, 7, 21, 22) of the rotor space (15) comprising sheet metal; **characterized in that** at least also the connector pipeline (4') for connecting to the exhaust-gas collection line (3, 4) is formed from sheet metal and is in a thermally conducting connection with the casing shell (6, 7, 21, 22) which comprises sheet metal, and **in that** the thermally conducting connection between the feed channel (21) and the connector pipeline (4') is configured as a sliding connection, or, in the case of sheet metal layers (6, 22) which are arranged above one another, the or one of the inner layers (6) forms the sliding connection, whereas the parts are welded to one another in the outermost layer (22).

## Revendications

1. Boîtier pour un turbocompresseur comprenant une chambre de rotor (15) pour recevoir un rotor de turbine (18), laquelle chambre de rotor (15) est entourée par un carter de turbine (17) présentant une enveloppe de boîtier (6, 7, 21, 22), laquelle enveloppe de boîtier présente un canal d'alimentation (21) relié à une partie de l'enveloppe de boîtier en spirale du carter de turbine (17), et se compose au moins en partie de tôle ; une conduite tubulaire de raccordement (4') pour le raccordement à au moins une conduite de collecte de gaz d'échappement (3, 4) d'un moteur à combustion interne (20) ;
l'enveloppe de boîtier (6, 7, 21, 22) de la chambre de rotor (15) se composant de tôle ; **caractérisé en ce qu'**au moins également la conduite tubulaire de raccordement (4') pour la connexion à la conduite de collecte de gaz d'échappement (3, 4) est formée en tôle et est en liaison thermoconductrice avec l'enveloppe de boîtier en tôle (6, 7, 21, 22), et **en ce que** la liaison thermoconductrice entre le canal d'alimentation (21) et la conduite tubulaire de raccordement (4') est réalisée sous forme de liaison coulissante, ou, lorsque des couches de tôle (6, 22) sont disposées l'une au-dessus de l'autre, les ou l'une des couches internes (6) forment la connexion coulissante, tandis que les pièces sont soudées l'une à l'autre dans la couche la plus extérieure (22).
